# EUROPEAN PATENT APPLICATION

(11) **EP 3 495 303 A1**
(43) Date of publication of application: **12.06.2019**
(21) Application number: 18210196.4
(22) Date of filing: 04.12.2018
(51) Int. Cl.: B66B 5/00

(54) **GAMIFICATION OF ELEVATOR AND BUILDING USAGE**

(30) Priority: 05.12.2017 US 201715831879
(71) Applicant: Otis Elevator Company, Farmington, Connecticut 06032 (US)
(72) Inventor: DANIELS, Harrison, Farmington, CT Connecticut 06032 (US); HSU, Arthur, Farmington, CT Connecticut 06032 (US); STANLEY, Jannah A., Farmington, CT Connecticut 06032 (US); VAN HASSEL, Bart Antonie, Hartford, CT Connecticut 06108 (US)
(74) Representative: Schmitt-Nilson Schraud Waibel Wohlfrom Patentanwälte Partnerschaft mbB

(57) **Abstract**

A method for rewarding user behavior, the method comprising: choosing behaviors to encourage; registering a user; tracking the user's behavior with respect to a building; and granting points to the user for engaging in encouraged behavior.

## Description

Existing elevator systems allow a user to submit an elevator call (e.g., a hall call or a destination call) using their own mobile device (e.g., a smartphone), an elevator call button, or through the use of a destination dispatch unit. During certain times (such as times of high usage), it can be desirable to incentivize optimized usage of the elevator system and the building in which the elevator system is located.

According to one embodiment, a method for rewarding user behavior includes: choosing behaviors to encourage; registering a user; tracking the user's behavior with respect to a building; and granting points to the user for engaging in encouraged behavior.

In addition to one or more of the features described above, or as an alternative, further embodiments may include allowing redemption of granted points, wherein redemption of granted points comprises providing a personalized elevator trip to the user.

In addition to one or more of the features described above, or as an alternative, further embodiments may include wherein redemption of granted points comprises providing a reward with monetary value.

In addition to one or more of the features described above, or as an alternative, further embodiments may include wherein registering the user comprises associating access-granting devices with a user account.

In addition to one or more of the features described above, or as an alternative, further embodiments may include wherein tracking the user's building behavior comprises tracking the user's stairway usage using the access-granting devices.

In addition to one or more of the features described above, or as an alternative, further embodiments may include wherein granting points comprises granting points based on the user's stairway usage and a time of day of the stairway usage.

In addition to one or more of the features described above, or as an alternative, further embodiments may include wherein each point is equivalent to estimated energy saved by the stairway usage.

In addition to one or more of the features described above, or as an alternative, further embodiments may include wherein tracking the user's building behavior comprises tracking the user's elevator dispatch usage using the access-granting devices.

In addition to one or more of the features described above, or as an alternative, further embodiments may include wherein the access-granting device comprises a device configured to allow the user to enter a restricted space.

In addition to one or more of the features described above, or as an alternative, further embodiments may include wherein the access-granting device includes of one or more of the following: a key card, a key fob, a biometric entry, and a mobile electronic device application.

In addition to one or more of the features described above, or as an alternative, further embodiments may include wherein tracking the user's building behavior comprises determining if the user turns off lights upon leaving a room.

In addition to one or more of the features described above, or as an alternative, further embodiments may include resetting points to a predetermined value at the expiration of a predetermined time period.

In addition to one or more of the features described above, or as an alternative, further embodiments may include wherein the user comprises a group of multiple people.

In addition to one or more of the features described above, or as an alternative, further embodiments may include wherein allowing redemption comprises: determining the user's position on a leaderboard; and allowing redemption if the user's position is higher than a predetermined amount; wherein the leaderboard comprises a list of multiple users and points earned by each user.

According to one embodiment, a computer program product tangibly embodied on a computer readable medium, the computer program product including instructions that, when executed by a processor, cause the processor to perform operations comprising: choosing behaviors to encourage; registering a user; tracking the user's behavior with respect to a building; granting points to the user for engaging in encouraged behavior; and allowing redemption of granted points.

The present disclosure is illustrated by way of example and not limited in the accompanying figures in which like reference numerals indicate similar elements.
FIG. 1 depicts a system in an example embodiment;
FIG. 2 depicts a flowchart of an exemplary embodiment;
FIG. 3 is a block diagram of a system capable of performing an exemplary embodiment; and
FIG. 4 is a block diagram of a computer readable medium of an exemplary embodiment.

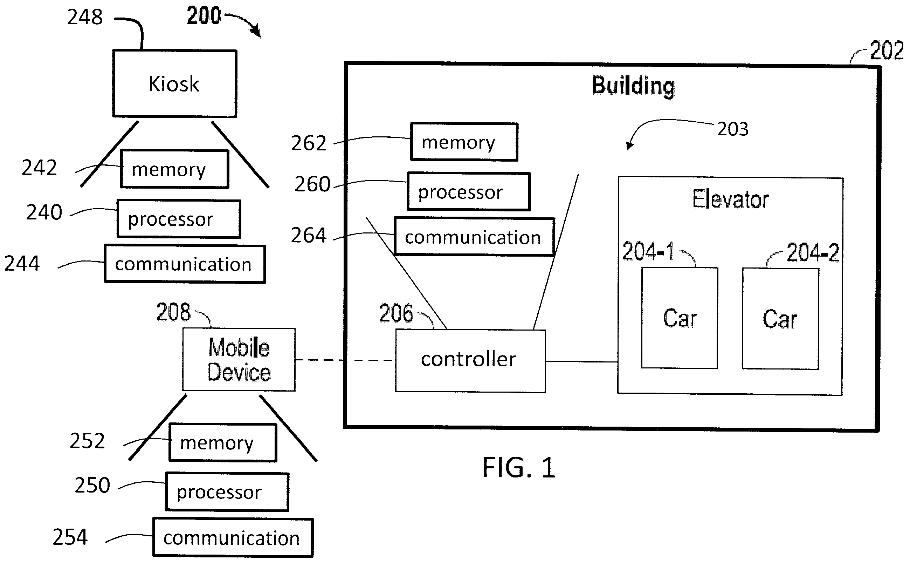

FIG. 1 depicts a system 200 in an example embodiment. The system 200 includes an elevator system 203 installed at a building 202. In some embodiments, the building 202 may be an office building or a collection of office buildings that may or may not be physically located near each other. The building 202 may include any number of floors. Persons entering the building 202 may enter at a lobby floor, or any other desired floor, and may go to a destination floor via one or more conveyance devices, such as the elevator system 203.

The elevator system 203 may include one or more computing devices, such as a controller 206. The controller 206 may be configured to control dispatching operations for one or more elevator cars (e.g., elevator cars 204-1, 204-2) associated with the elevator system 203. It is understood that the elevator system 203 may utilize more than one controller 206, and that each controller may control a group of one or more elevator cars 204-1 and 204-2. Although two elevator cars 204-1 and 204-2 are shown in FIG. 1, it is understood that any number of elevators cars may be used in the elevator system 203. The elevator cars 204-1 and 204-2 may be located in the same hoistway or in different hoistways so as to allow coordination amongst elevator cars 204-1 and 204-2 in different elevator banks serving different floors. It is understood that other components of the elevator system 203 (e.g., drive, counterweight, safeties, etc.) are not depicted for ease of illustration.

Also shown in FIG. 1 is a mobile device 208. The mobile device 208 may include a device that is carried by a person, such as a smart phone, PDA, tablet, etc. The mobile device 208 may include wearable items, such as a smart watch, eyewear, etc. The mobile device 208 may include a processor 250, memory 252 and communication module 254 as shown in FIG. 1. The processor 250 can be any type or combination of computer processors, such as a microprocessor, microcontroller, digital signal processor, application specific integrated circuit, programmable logic device, and/or field programmable gate array. The memory 252 is an example of a non-transitory computer readable storage medium tangibly embodied in the mobile device 208 including executable instructions stored therein, for instance, as firmware. The communication module 254 may implement one or more communication protocols as described in further detail herein.

The controller 206 may include a processor 260, memory 262 and communication module 264 as shown in FIG. 1. The processor 260 can be any type or combination of computer processors, such as a microprocessor, microcontroller, digital signal processor, application specific integrated circuit, programmable logic device, and/or field programmable gate array. The memory 262 is an example of a non-transitory computer readable storage medium tangibly embodied in the controller 206 including executable instructions stored therein, for instance, as firmware. The communication module 264 may implement one or more communication protocols as described in further detail herein.

The mobile device 208 and the controller 206 communicate with one another. For example, the mobile device 208 and the controller 206 may communicate with one another when proximate to one another (e.g., within a threshold distance). The mobile device 208 and the controller 206 may communicate over a wireless network, such as 802.11x (WiFi), short-range radio (Bluetooth), etc. In some embodiments, the controller 206 may include, or be associated with (e.g., communicatively coupled to) a networked element, such as kiosk, beacon, hall call fixture, lantern, bridge, router, network node, etc. The networked element may communicate with the mobile device 208 using one or more communication protocols or standards. For example, the networked element may communicate with the mobile device 208 using near field communications (NFC). In other embodiments, the controller 206 may establish communication with a mobile device 208 that is inside or outside of the building 202. This connection may be established with various technologies including cellular, WiFi, and the like, by way of non-limiting example. Such technologies that allow early communication will provide users and the systems more time to establish the most efficient passenger flow, and may eliminate the need for a user to stop moving to interact with the system. In example embodiments, the mobile device 208 communicates with the controller 206 over multiple independent wired and/or wireless networks. Embodiments are intended to cover a wide variety of types of communication between the mobile device 208 and controller 206, and embodiments are not limited to the examples provided in this disclosure.

In some embodiments, also in communication with controller 206 is a kiosk 248. Kiosk 240 may include a processor 240, memory 242 and communication module 244 as shown in FIG. 1. The processor 240 can be any type or combination of computer processors, such as a microprocessor, microcontroller, digital signal processor, application specific integrated circuit, programmable logic device, and/or field programmable gate array. The memory 242 is an example of a non-transitory computer readable storage medium tangibly embodied in the mobile device 208 including executable instructions stored therein, for instance, as firmware. The communication module 244 may communicate with controller 206 in one of a variety of different ways, both those currently known (such as Ethernet, USB, WiFi, Bluetooth and other communication mediums) and those developed in the future. The kiosk 248 can be embodied in one of a variety of difference manners, including a standalone device, a wall-mounted device, and the like.

Occasionally, there are times when it is desirable to encourage users to engage in certain types of behavior with respect to the elevator and other building systems. For example, certain buildings may have high-traffic periods when the elevators are heavily used. During such a high-traffic period, it might be desirable to reduce the number of users of the elevators by encouraging passengers to use stairs instead of the elevators for all or, at least part, of their journey. Encouraging other behaviors can also be desirable, such as encouraging correct usage of elevator interfaces, encouraging usage of mobile devices 208 to place elevator calls, encouraging appropriate queuing and efficient elevator loading, encouraging energy saving, and encouraging health-promoting activities.

In some embodiments, such behaviors can be tracked and rewarded. Encouragement can be in the form of incentives. Incentives can be monetary (e.g., a gift certificate to a restaurant in the building), or they can be non-monetary (e.g., very important person (VIP) treatment in an elevator ride, Wi-Fi access, personalized elevator settings such as music, lighting, or media content, or a spot on a leaderboard).

Any type of behavior that can be tracked can be chosen to be encouraged. As stated above, reducing the usage of elevators during certain time periods can be a behavior to be encouraged. In certain buildings, there can be "busy" times (also known as "peak" times). For example, in a hotel, the time period between 6 pm and 8 pm can be particularly busy because of people leaving for dinner. In an office building, the time period between 8 am and 9 am can be busy because of people arriving to work. Similar busy periods for office buildings can take place at weekdays at lunch time (between 12 noon and 1pm), and at the end of the work day (between 4 pm and 6 pm). On the other hand, weekends and night time can be considered low-demand time (also known as "off-peak" times). If a building operator wishes to reduce the demand on the elevators (both to reduce wait time and to reduce wear of the elevators), the building operator may choose to encourage the use of alternate forms of vertical transportation during the peak hours. Thus, the taking of stairs or escalators can be encouraged. This can be tracked in a variety of different manners. For example, in a building that uses key cards, smart phone entry, biometrics, or other types of entry access devices or systems, the stairways might be monitored or the user's location might be monitored. Thus, each time a particular user uses a stairway or other preferred transportation system, the user earns points. In other words, the user may earn points by being on a different floor without using an elevator car. In some embodiments, the points may be scaled such that more points are earned during busy time periods. For example, using the stairway during a peak period can lead to more points earned than using a stairway during a non-peak period.

The position of a user can be tracked in a variety of different manners. For example, some buildings have a user enter elevator information via a mobile electronic device, such as a smartphone or a smart watch. An application (or app) on the mobile electronic device is used to dispatch an elevator or track the user, using positioning data from the mobile electronic device. The mobile electronic device can also be used to gain access to certain parts of the building. For example, the user may have access to only the 16th through 20th floors. Thus, only doors on those floors might be accessible to the user via his app. A similar system can be used if the building uses key cards, key fobs, or any other type of device to restrict access. The user can then use his mobile electronic device, key card, key fob, etc. to access various areas of the 16th through 20th floors.

In some embodiments, access-granting devices can be used to track when the user uses a stairway. Thus, the user can earn a set amount of "points" (or other tracking system) each time the user uses a stairway. In some embodiments, the points earned can be based on the number of floors used. For example, using the stairway for two floors can earn more points than using the stairway for one floor. In some embodiments, using the stairway going up can earn more points than using the stairway going down, because of the additional health benefits of going up stairs.

In some embodiments, a user's use of the stairs can be equated to energy used for running an elevator. The amount of energy an elevator uses to go up or down a floor can be estimated. Thus, each time a user travels up or down via a stairway (tracked as described above), an equivalent amount of energy can be "earned". The points earned, instead of being an arbitrary number, can be based on the number of watts saved by using the stairs. Such a tracking system can provide goals that are more relatable by each user. Using the stairs can be equated to a treadmill with energy recovery. Thus, each user (or group of users) can be informed that they have saved the building a certain amount of energy in a certain time period. The energy can be tabulated in a form familiar to users, such as joules or kilowatt-hours.

In some embodiments, the tracking can use groups of users instead of single users. The groups of users can be formed in one of a variety of different manners. For example, every person who lives or works on a certain floor can be considered a group of users. In office building embodiments, the groups can be formed by employer. Other grouping techniques can be used. For example, groups can be self-selected. A building operator can define a size of a group (e.g., four people per group), and tenants can choose each group by themselves.

By grouping users, a building operator encourages tenants to become more engaged with their building. Such engagement promotes tenant's relationships to the building and helps build comradery with other people within each group. Rewards (described in greater detail below) can also be earned by each group.

Another behavior that can be encouraged is correct elevator interface usage. In a destination dispatch queueing system, each passenger is supposed to enter their destination, either in a kiosk, using a mobile app, or any other type of entry system. The elevator system uses the demand of each floor to determine which elevators to send to which floor.

However, if a group of 10 people were all going to the same destination, a common behavior of users is to not have each person enter the destination, because the elevator is already going to that destination. (E.g., 10 people are returning from lunch and are all proceeding to the 15th floor, one person will enter 15 as the destination and the remaining users might not enter a destination because the elevator is already going to the 15th floor.)

However, while such behavior is common in traditional elevator systems, such behavior can adversely affect a destination dispatch system. For example, the elevator system might assume that only one person is going to floor 15, so it will also place 10 other people in the elevator, despite the capacity of the elevator being only 12 people. Thus, the elevator will be too full because it is trying to fit all those people into the same elevator car.

Had each of the 10 users going to the 15th floor entered their intended destination, the elevator system would know that 10 people are going to the 15th floor, nearly filling the elevator. The elevator system will then dispatch a second elevator car for other passengers. While there are methods of alleviating such a problem (for example, sensing the weight of the elevator car or through the use of visual sensors of the interior of the elevator car when people board it to determine how many people are in the elevator car), it can be desirable to have each user enter their destination information for more efficient dispatching of elevator cars.

Thus, users can be encouraged to use the dispatch system in the intended manner. For example, each time a user uses a destination dispatch app on their mobile electronic device, they can receive points. The points being awarded for this act also can vary based on time, e.g., peak versus non-peak points. The points being awarded for efficient elevator dispatch can be combined with points awarded for using the stairs.

Another behavior that could be encouraged is the use of the user's mobile electronic device to call for an elevator instead of the central terminal. In a busy building, there could be a line of users for the central terminal during busy times of day. By encouraging users to use their mobile electronic device to call for an elevator, lines at the central terminal are alleviated.

Behaviors not directly related to an elevator system also can be encouraged and tracked. For example, in embodiments that use trackers on a mobile electronic device, those trackers can also track health-related activities, such as steps taken. Thus, steps taken can be tracked, with points awarded for reaching milestones (e.g., 10,000 steps in a day) or for being in a certain place on a leaderboard. If the health tracker keeps track of flights of stairs, such information also can be used for the stair usage points described above. Other applications that track activities can be imported into one or more embodiments. For example, if a user already has an application on a mobile electronic device or smartwatch that keeps track of activities, those activities can be imported into one or more embodiment such that points can be awarded for the activities.

In some embodiments, the mobile electronic device used to track points can be configured to have internet of things functionality and control devices such as lights. Thus, a user can receive points for turning off the lights when he leaves a room, in order to encourage eco-friendly building practices. Other eco-friendly practices also can be encouraged, such as encouraging elevator use in the down direction, to generate electricity in those elevator systems with regenerative drive.

The providing of points for certain behaviors can be considered a "gamification" of elevator usage. By turning daily aspects of a user's life into a game, certain behaviors can be encouraged. To make the game more interesting, incentives can be provided.

As described above, points can be awarded for certain tasks. Points could be used to provide incentives. There can be leaderboards. A leaderboard can be a list of people and the number of points they have earned. The number of points can be limited by time. Therefore, there can be a new leaderboard every week or every month. In some embodiments, the leaderboard can be the incentive in and of itself. For example, the leaderboard can be limited to a subset of people (such as employees of a certain company, people who live or work on a certain floor, and the like). By having a competition between users, users who desire to be at the top of a leaderboard will be incentivized to earn as many points as possible.

To encourage even more people to earn points, in some embodiments, points can lead to an award. For example, in an embodiment using leaderboards, the leader at the end of a time period (such as a week or a month) can win a prize. In some embodiments, the prize can be tangible or turned in for something tangible (such as a trophy, a gift card, or some other item with monetary value). The prize can be in conjunction with a health provider (such as a doctor, pharmacy, or health club) to encourage healthy behavior. In some embodiments, the prize can be intangible, such as a VIP elevator experience.

A VIP elevator experience provides a customized elevator ride for the winner. For example, the VIP elevator experience can be a solo ride, such that the user does not need to share an elevator ride with other passengers. The VIP elevator experience can be an express ride, such that the user is taken directly to his chosen floor, without having to stop at other floors first. (Passengers with a destination above the VIP passenger may still be allowed, but not passengers on floors below the VIP passenger.) Aspects of the elevator ride can be customized for the user, such as customized lighting scheme, customized music selections, customized video selections, and the like. An advantage of a VIP elevator experience is that, while there is a benefit to the winner, there is little to no monetary cost to the building operator.

The points can be redeemed in a variety of other manners. In a leaderboard model, the person at the top of the leaderboard (i.e., the person who has accumulated the greatest number of points during a predetermined time period) can receive a reward. This can be expanded such that more than one person can receive a reward. For example, first place can receive one reward, second place can receive a second reward, and third place can receive a third reward.

In some embodiments, instead of using a leaderboard model, the points can accumulate and can be used to "purchase" items once enough points are accumulated. For example, a VIP elevator experience can cost a certain number of points, a gift certificate can cost a different number of points, customization of the VIP elevator experience can cost a certain number of points. In this example, aspects of the VIP elevator experience can be "purchased" from a menu of options. Thus, customized music can cost a certain number of points, customized video selections can cost a certain number of points, express service can cost a certain number of points (or be costed based on a length of the trip, such that an express trip to the 35th floor can cost more than an express trip to the 17th floor.)

An advantage of such a method, as opposed to the leaderboard model, is that, under a leaderboard model, people can be discouraged from competing if it becomes clear that they cannot win. Thus, the use may engage in inefficient elevator practices or non-eco-friendly building practices. An accumulation model encourages users to maintain their behavior for a longer period of time, because they are constantly earning points that can be redeemed at a later time. A disadvantage of the accumulation model is that it can be more costly for the building operator, if monetary rewards are involved.

In some embodiments, machine learning algorithms can be used to optimize the operation of elevator systems. The behavior of the users is tracked to determine how the users react to various incentives. Thereafter, incentives can be modified to further encourage certain behaviors (both for health and to encourage eco-friendly behavior),

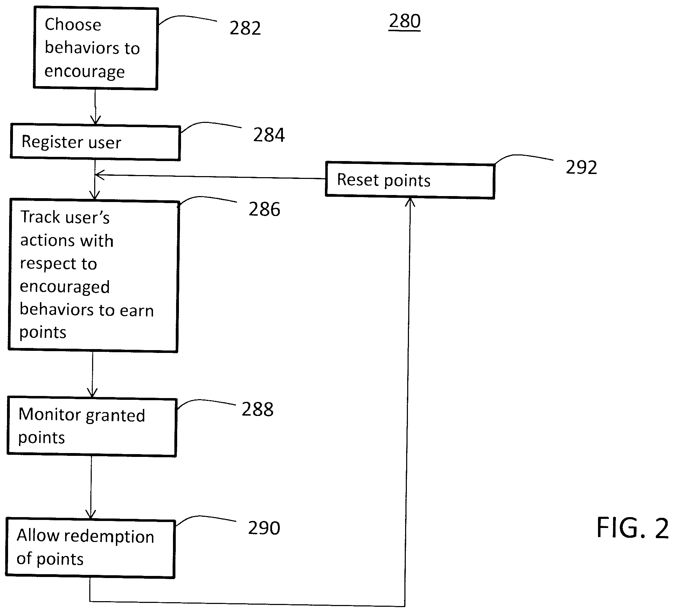

With respect to FIG. 2, a method 280 is presented that illustrates the operation of one or more embodiments. Method 280 is merely exemplary and is not limited to the embodiments presented herein. Method 280 can be employed in many different embodiments or examples not specifically depicted or described herein. In some embodiments, the procedures, processes, and/or activities of method 280 can be performed in the order presented. In other embodiments, one or more of the procedures, processes, and/or activities of method 280 can be combined, skipped, or performed in a different order.

Behaviors are chosen to be encouraged (block 282). As stated above, a variety of different behaviors (including stairway usage, efficient dispatch usage, eco-friendly building practices, and the like) can be selected from in order to create a gamification method. Thereafter, each user is registered (block 284). In some embodiments, registration can be optional such that only people who are interesting in participating submit a registration. In some embodiments, registration can be automatic, such that all users of the building (including tenants, employees, guests, and the like). The registration associates an account being used to track points with a user. Also associated are the user's entry access devices (e.g., the user's biometric information, key card, key fob, mobile electronic device key information and the user's health applications. The user might also be able to select a user name for display on an applicable leaderboard (if applicable).

The user's actions are tracked with respect to the encouraged behaviors (block 286). As discussed above, the actions can include the use of stairways, the proper usage of dispatch devices, eco-friendly building practices, and the like. Each time the user participates in such an activity, the user receives a pre-determined number of points. The number of points can vary and can be set by the building operator. More points can be granted for certain activities than others. In addition, more points can be granted during certain times of day, depending on the activity. The number of points awarded for each activity can be set forth beforehand.

In some embodiments, a software application designed for use on a mobile electronic device can be used to track the number of points earned. In such an embodiment, the number of points granted for each activity can be set forth, such that a user is able to determine beforehand how many points the user will earn.

The user's accumulated points can be monitored (block 288). In an embodiment using a software application to track each activity, the same application can be used by the user to monitor how many points have been earned. In some embodiments, points are earned during pre-determined time periods (such as a month or a week). The user can be able to view and track the number of points the user has earned during the time period. In a leaderboard model, the user might be able to see how many points are needed to be among the top point earners. In an accumulation model, the user might be able to determine how many points are needed to redeem a certain prize and modify his behavior accordingly.

Points can be redeemed for an award (block 290). As explained above, one of several models can be chosen. In an accumulation model, the user can redeem his points for a reward. For example, 1,000 points can be redeemed for custom elevator music. 2,000 points can be redeemed for an express elevator service. 5,000 points can be redeemed for a VIP elevator experience. 10,000 points can be redeemed for a $10 gift certificate. It should be understood that any point redemption scheme can be used, with any number of points being granted for various activities and any number of points used to redeem for a reward.

In a leaderboard model, at the end of a predetermined time period (such as the end of a week or a month), the top point owners can receive a reward. Any number of users can receive a reward. For example, the top three point earners can receive a reward. In some embodiments, the reward won by the top three point earners can be different, with the top point earner receiving a reward with the highest value. It should be understood that any reward system can be used.

In addition, while an accumulation model and a leaderboard model have been discussed, other models can be used, both those that currently exist and those developed in the future. In some embodiments, the user can choose between the model he wishes to use at registration (block 284).

Points are reset to zero (block 292) and the method can resume at block 286.

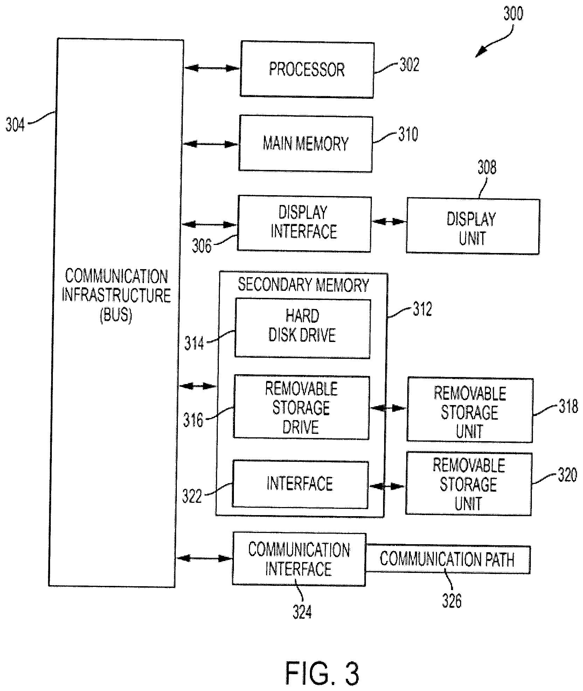

FIG. 3 depicts a high-level block diagram of a computer system 300, which can be used to implement one or more embodiments. More specifically, computer system 300 can be used to implement hardware components of systems capable of performing methods described herein. Although one exemplary computer system 300 is shown, computer system 300 includes a communication path 326, which connects computer system 300 to additional systems (not depicted) and can include one or more wide area networks (WANs) and/or local area networks (LANs) such as the Internet, intranet(s), and/or wireless communication network(s). Computer system 300 and additional system are in communication via communication path 326, e.g., to communicate data between them.

Computer system 300 includes one or more processors, such as processor 302. Processor 302 is connected to a communication infrastructure 304 (e.g., a communications bus, cross-over bar, or network). Computer system 300 can include a display interface 306 that forwards graphics, textual content, and other data from communication infrastructure 304 (or from a frame buffer not shown) for display on a display unit 308. Computer system 300 also includes a main memory 310, preferably random access memory (RAM), and can also include a secondary memory 312. Secondary memory 312 can include, for example, a hard disk drive 314 and/or a removable storage drive 316, representing, for example, a floppy disk drive, a magnetic tape drive, or an optical disc drive. Hard disk drive 314 can be in the form of a solid state drive (SSD), a traditional magnetic disk drive, or a hybrid of the two. There also can be more than one hard disk drive 314 contained within secondary memory 312. Removable storage drive 316 reads from and/or writes to a removable storage unit 318 in a manner well known to those having ordinary skill in the art. Removable storage unit 318 represents, for example, a floppy disk, a compact disc, a magnetic tape, or an optical disc, etc. which is read by and written to by removable storage drive 316. As will be appreciated, removable storage unit 318 includes a computer-readable medium having stored therein computer software and/ or data.

In alternative embodiments, secondary memory 312 can include other similar means for allowing computer programs or other instructions to be loaded into the computer system. Such means can include, for example, a removable storage unit 320 and an interface 322. Examples of such means can include a program package and package interface (such as that found in video game devices), a removable memory chip (such as an EPROM, secure digital card (SD card), compact flash card (CF card), universal serial bus (USB) memory, or PROM) and associated socket, and other removable storage units 320 and interfaces 322 which allow software and data to be transferred from the removable storage unit 320 to computer system 300.

Computer system 300 can also include a communications interface 324. Communications interface 324 allows software and data to be transferred between the computer system and external devices. Examples of communications interface 324 can include a modem, a network interface (such as an Ethernet card), a communications port, or a PC card slot and card, a universal serial bus port (USB), and the like. Software and data transferred via communications interface 324 are in the form of signals that can be, for example, electronic, electromagnetic, optical, or other signals capable of being received by communications interface 324. These signals are provided to communications interface 324 via communication path (i.e., channel) 326. Communication path 326 carries signals and can be implemented using wire or cable, fiber optics, a phone line, a cellular phone link, an RF link, and/or other communications channels.

In the present description, the terms "computer program medium," "computer usable medium," and "computer-readable medium" are used to refer to media such as main memory 310 and secondary memory 312, removable storage drive 316, and a hard disk installed in hard disk drive 314. Computer programs (also called computer control logic) are stored in main memory 310 and/or secondary memory 312. Computer programs also can be received via communications interface 324. Such computer programs, when run, enable the computer system to perform the features discussed herein. In particular, the computer programs, when run, enable processor 302 to perform the features of the computer system. Accordingly, such computer programs represent controllers of the computer system. Thus it can be seen from the forgoing detailed description that one or more embodiments provide technical benefits and advantages.

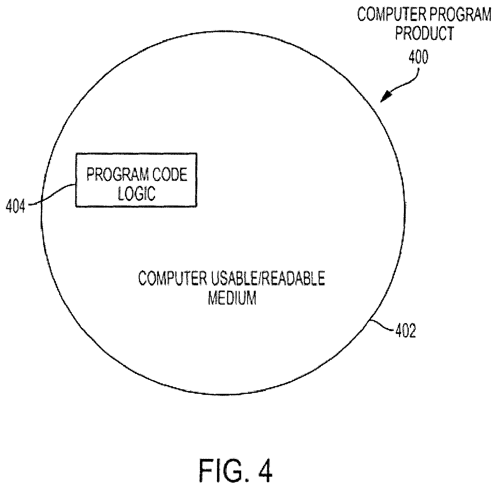

Referring now to FIG. 4, a computer program product 400 in accordance with an embodiment that includes a computer-readable storage medium 402 and program instructions 404 is generally shown.

Embodiments can be a system, a method, and/or a computer program product. The computer program product can include a computer-readable storage medium (or media) having computer-readable program instructions thereon for causing a processor to carry out aspects of embodiments of the present invention.

The computer-readable storage medium can be a tangible device that can retain and store instructions for use by an instruction execution device. The computer-readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions for carrying out embodiments can include assembler instructions, instruction-set-architecture (ISA) instructions, machine instructions, machine dependent instructions, microcode, firmware instructions, state-setting data, or either source code or object code written in any combination of one or more programming languages, including an object-oriented programming language such as Smalltalk, C++ or the like, and conventional procedural programming languages, such as the "C" programming language or similar programming languages. The computer-readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer-readable program instructions by utilizing state information of the computer-readable program instructions to personalize the electronic circuitry, in order to perform embodiments of the present invention.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., a processor, apparatus or system) to perform one or more methodological acts as described herein.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments have been described, it is to be understood that aspects of the disclosure may include only some of the described embodiments. Accordingly, the disclosure is not to be seen as limited by the foregoing description, but is only limited by the scope of the appended claims.

## Claims

1. A method for rewarding user behavior, the method comprising:
choosing behaviors to encourage;
registering a user;
tracking the user's behavior with respect to a building; and
granting points to the user for engaging in encouraged behavior.

2. The method of claim 1 further comprising:
allowing redemption of granted points, wherein redemption of granted points comprises providing a personalized elevator trip to the user.

3. The method of claim 1 or 2, wherein:
redemption of granted points comprises providing a reward with monetary value.

4. The method of any of claims 1 to 3, wherein:
registering the user comprises associating access-granting devices with a user account.

5. The method of claim 4 wherein:
tracking the user's building behavior comprises tracking the user's stairway usage using the access-granting devices.

6. The method of claim 5, wherein:
granting points comprises granting points based on the user's stairway usage and a time of day of the stairway usage; and
wherein each point is equivalent to estimated energy saved by the stairway usage.

7. The method of any of claims 1 to 6, wherein:
tracking the user's building behavior comprises tracking the user's elevator dispatch usage using the access-granting devices;

8. The method of any of claims 1 to 7, wherein:
tracking the user's building behavior comprises tracking the user's use of elevator dispatch usage through a mobile electronic device.

9. The method of any of claims 1 to 8, wherein:
tracking the user's building behavior comprises tracking the user's eco-friendly building practices.

10. The method of any of claims 1 to 9, wherein:
the access-granting device comprises a device configured to allow the user to enter a restricted space.

11. The method of any of claims 1 to 10, wherein:
the access-granting device includes of one or more of the following: a key card, a key fob, a biometric entry, and a mobile electronic device application.

12. The method of any of claims 1 to 11, wherein:
tracking the user's building behavior comprises determining if the user turns off lights upon leaving a room.

13. The method of any of claims 1 to 12, wherein:
allowing redemption comprises:
determining the user's position on a leaderboard; and
allowing redemption if the user's position is higher than a predetermined amount;
wherein the leaderboard comprises a list of multiple users and points earned by each user.

14. A computer program product tangibly embodied on a computer readable medium, the computer program product including instructions that, when executed by a processor, cause the processor to perform operations according to any of the previous claims.
